(19)

Europäisches Patentamt

European Patent Office

Office européen des brevets

(11)  **EP 4 489 137 A1**

(12)  **EUROPEAN PATENT APPLICATION**
published in accordance with Art. 153(4) EPC

(43) Date of publication:
**08.01.2025  Bulletin 2025/02**

(21) Application number: **23763282.3**

(22) Date of filing: **17.02.2023**

(51) International Patent Classification (IPC):
*H01M 4/62* (2006.01)     *C01B 32/174* (2017.01)
*C08K 3/04* (2006.01)     *C08L 29/14* (2006.01)
*H01B 1/24* (2006.01)     *H01B 13/00* (2006.01)
*H01G 11/06* (2013.01)     *H01G 11/30* (2013.01)
*H01G 11/36* (2013.01)     *H01M 4/13* (2010.01)
*H01M 4/139* (2010.01)

(52) Cooperative Patent Classification (CPC):
**C01B 32/174; C08K 3/04; C08L 29/14; H01B 1/24;**
**H01B 13/00; H01G 11/06; H01G 11/30;**
**H01G 11/36; H01M 4/13; H01M 4/139; H01M 4/62;**
**Y02E 60/10**

(86) International application number:
**PCT/JP2023/005790**

(87) International publication number:
**WO 2023/167023 (07.09.2023 Gazette 2023/36)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **04.03.2022  JP 2022033331**

(71) Applicant: **Sanyo Color Works, Ltd.**
**Himeji-shi,**
**Hyogo 670-0966 (JP)**

(72) Inventors:
• UEMURA Yu
  **Himeji-shi, Hyogo 670-0966 (JP)**
• TANAKA Yuki
  **Himeji-shi, Hyogo 670-0966 (JP)**

(74) Representative: **Vossius & Partner**
**Patentanwälte Rechtsanwälte mbB**
**Siebertstrasse 3**
**81675 München (DE)**

(54)  **CARBON NANOTUBE-CONTAINING POWDER FOR ELECTRODES, ELECTRODE MIXTURE PASTE, ELECTRODE FOR POWER STORAGE DEVICES, AND POWER STORAGE DEVICE**

(57)  Provided is CNT-containing powder for electrodes, which contains carbon nanotubes (CNTs) and a modified polyvinyl alcohol resin having an acetal structure and serving as a dispersant. In the CNT-containing powder for electrodes, the dispersant may be adhered to a surfaces of each of the CNTs. In the CNT-containing powder for electrodes, the content weight ratio of the CNT to the dispersant (CNT:dispersant) may be 33:67 to 99:1.

**EP 4 489 137 A1**

**Description**

TECHNICAL FIELD

The present invention relates to: carbon nanotube (CNT)-containing powder for electrodes; a method for producing the same; an electrode slurry containing the CNT-containing powder; and an electrode for power storage devices and a power storage device, each of the electrode for power storage devices and the power storage device including an electrode mixture layer prepared from the electrode slurry.

BACKGROUND ART

Conventionally, as substances that are excellent in various characteristics such as conductivity, heat conductivity, and mechanical characteristics, carbon nanotubes (hereinafter, also referred to as "CNT") and the like are known. In recent years, in a positive electrode of a lithium ion secondary battery, three materials including an electrode active material, a binder, and a conductive agent are used as main materials. The active material that occupies 90% or more of the positive electrode mixture has poor conductivity. Accordingly, carbon black (acetylene black) has been used as a conductive agent that solves the foregoing problem. In recent years, CNT having better conductivity than carbon black has been attracting attention.

In order for CNT to effectively act as a conductive agent, the CNT is required to be sufficiently dispersed in the electrode active material. However, the CNT tends to agglomerate easily and is hardly dispersed. To improve the dispersibility of CNT, an attempt has been made in which a CNT dispersion containing CNT and a dispersant is prepared in advance, and the CNT dispersion is mixed with the electrode active material or the like. For example, Patent Literature (PTL) 1 discloses a CNT dispersion having a CNT concentration of 2 to 30% in which 30 to 200 parts by weight of a non-ionic dispersant is used per 100 parts by weight of CNT. In general, the CNT in the state of a dispersion (including paste state) is used so as to prevent agglomeration of CNT, and to reduce surface resistivity of the electrode prepared with the dispersion of CNT, thereby achieving good conductivity.

CITATION LIST

[PATENT LITERATURE]

[PTL 1] Japanese Patent No. 5628503

SUMMARY OF THE INVENTION

PROBLEMS TO BE SOLVED BY THE INVENTION

Here, the present inventors prepared an electrode slurry for electrodes from the CNT dispersion and observed the state of the surface of the electrode active material using an electron microscope, and they found a part to which CNT was not adhered. In addition, CNT was not sufficiently dispersed, and an agglomerate was observed. Thus, the present inventors realized that, in the electrode mixture obtained by the conventional technique, there is room for improvement in the adhesion of CNT onto the surface of the electrode active material and the dispersion of CNT in the electrode mixture.

Therefore, it is an object of the present invention to provide a carbon nanotube (CNT)-containing powder for electrodes that is excellent in adhesivity on the surface of an electrode active material, and is capable of exerting excellent dispersibility in an electrode mixture, and a method for producing the same.

It is another object of the present invention to provide a composite for electrodes and an electrode slurry, with which an electrode having low surface resistivity can be obtained by using the CNT-containing powder for electrodes, and an electrode for power storage devices and a power storage device, in which the electrode slurry is used.

SOLUTION TO THE PROBLEMS

The present invention relates to CNT-containing powder for electrodes, containing:

carbon nanotubes (CNT); and
a modified polyvinyl alcohol resin that has an acetal structure and serves as a dispersant.

In an aspect of the present invention, the dispersant may be adhered to the surfaces of the CNT.

In an aspect of the present invention, a content weight ratio between the CNT and the dispersant (CNT:dispersant) may be 33:67 to 99:1.

Another aspect of the present invention relates to a composite for electrodes, which contains the CNT-containing powder for electrodes and an inorganic compound, in which the inorganic compound is an electrode active material and/or a solid electrolyte.

Still another aspect of the present invention relates to an electrode slurry containing the CNT-containing powder for electrodes, an electrode active material, a binder, and a solvent.

Still another aspect of the present invention relates to an electrode for power storage devices, which includes an electrode mixture layer prepared from the electrode slurry.

Still another aspect of the present invention relates to a power storage device including an electrode mixture layer prepared from the electrode slurry.

Still another aspect of the present invention relates to a method for producing the CNT-containing powder for electrodes, the method including kneading the CNT, the dispersant, and a solvent to prepare a kneaded matter in a paste form, and subsequently drying the kneaded matter to obtain CNT-containing powder.

In the other aspect, the solvent may be one or more kinds selected from the group consisting of an alcohol-based solvent, an amine-based solvent, an ether-based solvent, a glycol ester-based solvent, a ketone-based solvent, and water.

## ADVANTAGEOUS EFFECTS OF THE INVENTION

The CNT-containing powder for electrodes according to the present invention has excellent dispersibility and excellent conductivity in an electrode, . Accordingly, an electrode for power storage devices that is obtained by using a composite for electrodes or an electrode slurry, which contains the CNT-containing powder for electrodes, has low surface resistivity and excellent conductivity. Therefore, a power storage device obtained by using the CNT-containing powder for electrodes of the present invention is capable of significantly improving the discharge capacity.

## BRIEF DESCRIPTION OF THE DRAWINGS

[FIG. 1] FIG. 1 is an electron microscopic image showing the state of the surface of an electrode active material in an electrode prepared with an electrode slurry obtained in Test example 1. FIG. 1A shows the front side of the electrode, and FIG. 1B shows the back side of the electrode.
[FIG. 2] FIG. 2 is an electron microscopic image showing the state of the surface of an electrode active material in an electrode prepared with an electrode slurry obtained in Test example 5. FIG. 2A shows the front side of the electrode, and FIG. 2B shows the back side of the electrode.

## DESCRIPTION OF EMBODIMENTS

Hereinafter, embodiments of the present invention are described.

<CNT-containing powder for electrodes>

CNT-containing powder for electrodes (hereinafter, also referred to as CNT powder or CNT powder for electrodes, of the present invention) according to an embodiment of the present invention contains carbon nanotubes (CNT), and a modified polyvinyl alcohol resin having an acetal structure, as a dispersant.

Examples of the CNT used in the present invention include single-walled carbon nanotubes (SWCNT), multi-walled carbon nanotubes (MWCNT), and the like.

The SWCNT and MWCNT may be those usable for electrodes of power storage devices, and for example, the diameter, the length, and the aspect ratio of SWCNT or MWCNT are not particularly limited.

In the present invention, SWCNT and MWCNT may be used singly or in combination.

Examples of the modified polyvinyl alcohol resin having an acetal structure (hereinafter, modified polyvinyl alcohol resin) to be used as a dispersant in the present invention include a polyvinyl butyral resin, a polyvinyl formal resin, and a polyvinyl acetoacetal resin.

Also, the modified polyvinyl alcohol resin may be a polyvinyl alcohol-based resin having acetal or a modifying group other than the acetal.

Examples include:

a modified polyvinyl alcohol resin containing a structural unit having an alkyl modifying group on the side chain,

a modified polyvinyl acetal resin containing a vinyl ester unit, a vinyl alcohol unit, an α-olefin unit, and an acetal resin, and

a modified polyvinyl acetal resin synthesized by acetalization between aldehyde and a modified polyvinyl alcohol resin obtained by saponifying a resin mixture of a copolymer of an unsaturated (di)carboxylic acid or an unsaturated (di) carboxylic acid derivative and a vinyl ester, and a copolymer of ethylene and vinyl ester before mixing or after mixing.

Specific examples include, but are not particularly limited to, commercial products, and those described in Japanese Patent No. 4828347, Japanese Patent No. 5179308, Japanese Patent No. 5563188, Japanese Patent No. 3306112, Japanese Patent No. 4584666, Japanese Patent No. 4302589, Japanese Patent No. 5162124, Japanese Patent No. 5820200, Japanese Patent No. 5899379, Japanese Patent No. 6259952, Japanese Unexamined Patent Application Publication No. H06-122713, Japanese Unexamined Patent Application Publication No. H06-192326, Japanese Unexamined Patent Application Publication No. 2021-080319, Japanese Unexamined Patent Application Publication No. 2018-210827, and Japanese Unexamined Patent Application Publication No. 2020-088389.

An average molecular weight of the modified polyvinyl acetal resin is preferably $1.0 \times 10^4$ to $5.0 \times 10^4$ from the viewpoint of solubility to a solvent and dispersibility of CNT.

Also, a hydroxyl group amount of the modified polyvinyl acetal resin is preferably 20 mol% or more from the viewpoint of solubility to a solvent and dispersibility of CNT.

In the CNT powder of the present invention, a content weight ratio between the CNT and the dispersant (CNT:dispersant) may be adjusted within the range of 33:67 to 99:1.

The CNT powder of the present invention can be prepared by kneading the CNT, the dispersant, and a solvent to prepare a kneaded matter in a paste form, and then drying the kneaded matter.

Also, the CNT powder of the present invention has such a structure that the dispersant is adhered to the surfaces of the CNT. With such a structure, the CNT powder of the present invention has excellent dispersibility in an electrode material, and widely adheres to the surfaces of electrode materials such as an electrode active material, a solid electrolyte, and the like to exert excellent conductivity.

The fact that the CNT powder has the aforementioned structure can be confirmed, for example, by dispersing the CNT powder of the present invention in a solvent such as N-methyl-2-pyrrolydone (NMP), and examining the weight of the released dispersant.

The CNT powder of the present invention exhibits the following merits.

1. Rheological change due to agglomeration or deposition of CNT, concentration change due to solvent volatilization, and the like do not occur, and thus stability is excellent.

2. The service life of the product is long, and solvents collected and recycled in a battery plant are not reused in a dispersion plant. Therefore, there is no need to build a dispersion plant near the battery plant.

3. Since the CNT content is high, it is considered that there is little limitation in the aspect of prescription in preparing the electrode mixture.

4. Since the CNT content is high and the volume and the weight (per CNT unit weight) are small, the costs of transportation and storage are low.

5. Since the CNT powder of the present invention has excellent dispersibility when used in preparing electrode mixtures of various compositions, the CNT powder is applicable to various battery systems. For example, the same CNT powder can be used both in a liquid system such as a lithium ion battery and in a solid system such as a sulfide-type all-solid-state battery.

On the other hand, commercial products and conventional products (dispersion) exhibit the following demerits.

1. It is generally known that a dispersion is more susceptible to rheological change due to agglomeration and deposition of CNT and to concentration change due to solvent volatilization and the like, in comparison with the CNT powder of the present invention, and thus the stability is poor and the service life of the product is short.

2. Due to the short service life of a product, or the reuse of solvents that are collected and recycled in a battery plant, it is necessary to build a dispersion plant near the battery plant.

3. Most of commercial products generally have a CNT content of 6% by weight or less. Such a low CNT content causes a limitation in prescription of the electrode mixture.

4. Since the CNT content is low and the volume and the weight (per CNT unit weight) are large, the costs of transportation and storage increases.

5. Designing a dispersion tailored for the battery system is required. For example, the usable solvents are different between a liquid system such as a lithium ion battery and a solid system such as a sulfide-type all-solid-state battery. With different solvents, the CNT dispersion condition is likely to change.

Examples of the solvent include alcohol-based solvents, amine-based solvents, ether-based solvents, glycol ester-based solvents, ketone-based solvents, and water.

Examples of the alcohol-based solvents include methanol, ethanol, n-propyl alcohol, isopropyl alcohol (IPA), butyl alcohol, octyl alcohol, cyclohexanol, allyl alcohol, benzyl alcohol, cresol, furfuryl alcohol, propylene glycol monomethyl ether (PM), ethylene glycol monomethyl ether, ethylene glycol monoethyl ether, ethylene glycol tertiarybutyl ether (ETB), ethylene glycol monobutyl ether, 3-methoxy-3-methyl-1-butanol, ethylene glycol monopropyl ether, ethylene glycol phenyl ether, diethylene glycol monobutyl ether, triethylene glycol monobutyl ether, and dipropylene glycol monomethyl ether.

Examples of the amine-based solvents include N,N-dimethylaminopropylamine and diethylene triamine.

Examples of the ether-based solvents include methylphenyl ether (anisole), tetrahydrofuran, dioxane, and ethylene glycol dimethyl ether.

Examples of the glycol ester-based solvents include propylene glycol monomethyl ether acetate (PMA), ethylene glycol monoethyl ether acetate, 3-methoxybutyl acetate, and ethylene glycol diacetate.

Examples of the ketone-based solvents include acetone, methylethylketone (MEK), cyclopentanone, and cyclohexanone.

These solvents may be used singly or in combination of two or more of these solvents.

In the present invention, from the viewpoint of solubility of the dispersant and prevention of agglomeration of CNT in drying, it is preferable that the solvent has the contribution ratio of the hydrogen bond term determined by the following mathematical formula (1) is 0.20 or more, and the vapor pressure at 20°C is larger than 0.1 kPa.

Contribution ratio of hydrogen bond term = (hydrogen bond term $\delta_H$ of Hansen solubility parameter of the solvent)/(vector length $\delta$ of Hansen solubility parameter of the solvent)      Mathematical formula (1)

The contribution ratio is preferably 0.90 or less.

The "Hansen solubility parameter" (also referred to as HSP) refers to a parameter in which the vaporization energy is divided into the following three: a dispersion term ($\delta_D$), a polarization term ($\delta_P$), and a hydrogen bond term ($\delta_H$).

HSPs of individual solvents have been determined from the experimental values of latent heat of vaporization, index of refraction, dipole moment, dielectric constant, and so on, and are publicly known.

The vector length $\delta$ of HSP of a solvent refers to the length calculated from the following mathematical formula (2) when the predetermined dispersion term ($\delta_D$), polarization term ($\delta_P$), and hydrogen bond term ($\delta_H$) of the solvent are treated as three-dimensional vectors. The value corresponds to a Hildebrand solubility parameter.

$$\delta^2 = \delta_D{}^2 + \delta_P{}^2 + \delta_H{}^2 \cdots \text{Mathematical formula (2)}$$

An empirical formula indicating that solvents with resembling vectors tend to dissolve solutes with resembling vectors is known.

The vapor pressure at 20°C can be measured by a known technique.

When a solvent having a contribution ratio of the hydrogen bond term indicated by the mathematical formula (1) and the vapor pressure respectively falling within predetermined ranges is used in preparing the CNT powder of the present invention, the dispersant tends to dissolve easily, and a kneaded matter in a paste form in which the CNT and the dispersant exist homogenously is easily obtained. In addition, CNT is prevented from agglomerating in the CNT power obtained by drying the kneaded matter.

The amounts of CNT and the solvent blended with the dispersant are not particularly limited as long as a kneaded matter in a paste form is obtained.

Examples of a mixer for use in the kneading include a planetary mixer, a kneader, an extrusion type kneader, and a thin-film spin system high-speed mixer.

The planetary mixer is a machine that performs mixing by material residence and shear stress by the centrifugal force generated by rotation and revolution (planetary motion), and is also called a rotating/revolving mixer.

As the planetary mixer, commercially available manufacturing equipment can be used without any particular limitation.

Conditions in preparing the kneaded matter are not particularly limited.

A means for drying the kneaded matter obtained as described above is not particularly limited, and the drying may be performed with an apparatus capable of adjusting the temperature to a temperature at which the solvent volatilizes or higher, an apparatus capable of removing the solvent by reduced pressure, a freeze dryer, or the like. For example, from the viewpoint of drying efficiently, it is preferred that the solvent is volatilized while the kneaded matter is kneaded at an elevated treatment temperature with the planetary mixer.

The degree of volatilizing the solvent is not particularly limited as long as the kneaded matter becomes a powder form. If the drying is insufficient or odor of the solvent is sensed when the kneaded matter is taken out of the drying apparatus, additional drying may be performed. The CNT powder of the present invention has the properties of being less likely to agglomerate even in such a drying step.

<Composite for electrodes>

A composite for electrodes according to the present invention contains the CNT powder for electrodes and an inorganic compound, and the inorganic compound is an electrode active material and/or a solid electrolyte.

The composite for electrodes can be used as a material for preparing an electrode.

For example, the composite for electrodes containing the electrode active material is mixed and kneaded with carbon black, a binder, and a solvent, thereby preparing an electrode slurry.

Examples of the inorganic compound include an electrode active material and a solid electrolyte.

The electrode active material includes active materials to be used in a positive electrode or a negative electrode.

Examples of the positive electrode active material include lamellar oxide ($LiCoO_2$, $LiNiO_2$, $LiNi_{1/3}Mn_{1/3}Co_{1/3}$, etc.), spinel-type oxide ($LiMnO_2$, $LiMn_{1.6}Ni_{0.4}O_4$, etc.), olivine-type oxide ($LiFePO_4$, $Fe_2(SO_4)_3$, $LiCoPO_4$, etc.), and inverse-spinel-type oxide ($LiCoVO_4$, $LiNiVO_4$, etc.), which are used in a positive electrode of a lithium ion battery.

Examples of the negative electrode active material include carbon-based materials (graphite, non-graphitizable carbon, amorphous carbon, fired high molecular compounds (e.g., phenol resin, furan resin, and the like are fired to be carbonized), cokes (e.g., pitch coke, needle coke, petroleum coke, etc.), carbon fiber, etc.), oxide-based materials ($Li_2TiO_3$, $TiNb_xO$, etc.), and silicon-based materials (Si, SiO), which are used in a negative electrode of a lithium ion battery.

Each of the positive electrode active material and the negative electrode active material may be used singly or in combination of two or more materials.

The solid electrolyte is a solid capable of conducting only ions, and is merely required to be usable in a power storage device depending on the kind of the power storage device as described later.

Examples of the lithium ion conductive solid electrolyte include the following.

· Oxide-based solid electrolyte: crystalline ($Li_{1.3}Al_{0.3}Ti_{1.7}(PO_4)_3$, $La_{0.51}Li_{0.34}TiO_{2.94}$, $Li_7La_3Zr_2O_{12}$, etc.), amorphous ($Li_{2.9}PO_{3.3}N_{0.46}$, etc.)
· Sulfide-based solid electrolyte: crystalline ($Li_{10}GeP_2S_{12}$, $Li_{3.25}Ge_{0.25}P_{0.75}S_4$, $Li_6PS_5Cl$, etc.), glass ceramic ($Li_7P_3S_{11}$, etc.), amorphous ($70Li_2S\text{-}30P_2S_5$, etc.)
· Others ($Li_2B_{12}H_{12}$, $Li_3OCl_{0.5}Br_{0.5}$, etc.)

A content of the CNT-containing powder of the present invention in the composite for electrodes is not particularly limited, and may be appropriately adjusted depending on the kind of the inorganic compound, the kind of CNT, the kind of the electrode to which the composite is applied, and the kind of the power storage device to which the composite is applied. For example, in the case of a composite applied to a negative electrode of a secondary battery, the content of the CNT-containing powder may be 0.01 to 10% by weight.

The CNT-containing powder for electrodes and the inorganic compound are mixed, thereby producing the composite for electrodes.

The mixing is not particularly limited, and may be carried out in any of wet and dry methods. Examples of the mixer for use in the mixing include a planetary mixer, a kneader, an extrusion type kneader, and a thin-film spin system high-speed mixer.

For example, a composite for electrodes containing an electrode active material as the inorganic compound can be prepared through the following steps.

Homogenizing step: preparing a mixture in which an electrode active material, CNT powder for electrodes, and a solvent are mixed.
Defibrating step: kneading the mixture using the mixer.
Finishing step: removing the solvent by drying or the like as necessary.

Examples of the solvent include, but are not particularly limited to:

alcohol-based solvents such as methanol, ethanol, n-propyl alcohol, IPA, butyl alcohol, octyl alcohol, cyclohexanol, allyl alcohol, benzyl alcohol, cresol, and furfuryl alcohol;
alcohol ether-based solvents such as PM, ethylene glycol monomethyl ether, ethylene glycol monoethyl ether, ETB, ethylene glycol monobutyl ether, 3-methoxy-3-methyl-1-butanol, ethylene glycol monopropyl ether, ethylene glycol phenyl ether, diethylene glycol monobutyl ether, triethylene glycol monobutyl ether, and dipropylene glycol monomethyl ether;

amine-based solvents such as N,N-dimethylaminopropyl amine and diethylene triamine;

ether-based solvents such as methylphenyl ether (anisole), tetrahydrofuran, dioxane, and ethylene glycol dimethyl ether;

glycol ester-based solvents such as PMA, ethylene glycol monoethyl ether acetate, 3-methoxybutyl acetate, and ethylene glycol diacetate;

ketone-based solvents such as acetone, MEK, cyclopentanone, and cyclohexanone;

aromatic hydrocarbon-based solvents such as benzene, toluene, xylene, cymene, and mesitylene;

aprotic polar solvents such as NMP, dimethylsulfoxide, and dimethylformamide;

aliphatic hydrocarbon-based solvents such as pentane, n-hexane, octane, cyclopentane, and cyclohexane;

aldehyde-based solvents such as furfural;

ester-based solvents such as butyl acetate, ethyl acetate, methyl acetate, butyl propionate, ethylene glycol monoethyl ether acetate, 3-methoxybutyl acetate, ethylene glycol diacetate, dimethyl carbonate, diethyl carbonate, ethylene carbonate, propylene carbonate, and butyl butyrate;

polyol-based solvents such as glycerol, ethylene glycol, and diethylene glycol; and

water.

Among these, when NMP or water is used, excellent defibration property of CNT can be exerted.

In the defibrating step, the concentration of the electrode active material is adjusted to the concentration of the electrode active material (C, unit: % by weight), which is calculated on the basis of the following mathematical formula (3) from a tap density ($D_{Tap}$) (unit: g/cm$^3$) of the electrode active material, while the solvent is added as necessary. Accordingly, it is possible to provide good defibration property of CNT when kneaded with the solvent, and it is possible to improve the uniform dispersibility of CNT.

$$C = 7.0 \times D_{Tap} + \alpha \cdots \text{Mathematical formula (3)}$$

(wherein $60 \leq \alpha \leq 70$ is satisfied)

A tap density of the electrode active material can be measured by the prescription according to JIS K 5101-12-2. Regarding a commercially available electrode active material, the mathematical value described in a catalogue may be used.

<Electrode slurry>

An electrode slurry according to the present invention contains the CNT powder for electrodes, an electrode active material, a binder, and a solvent.

A content of the CNT powder for electrodes in the electrode slurry of the present invention may be appropriately adjusted depending on a type of the power storage device to which the electrode slurry is applied, from the viewpoint of improvement in conductivity and the capacity of the power storage device.

The electrode active material is not particularly limited as long as it can be used in the composite for electrodes.

A content of the electrode active material in the electrode slurry of the present invention may be appropriately adjusted depending on a type of the power storage device to which the electrode slurry is applied, from the viewpoint of improvement in conductivity and the capacity of the power storage device.

The binder may be any binder that can be used in an electrode for power storage devices. Examples of such binder include polyvinylidene fluoride (PVDF), polyvinyl alcohol, polyvinyl acetal, acrylic resin, polyvinyl acetate, polyvinyl chloride, polystyrene, polyvinyl ether, polyvinyl pyrrolidone (PVP), styrene-butadiene rubber (SBR), and carboxymethyl cellulose. These may be modified with various functional groups, and as such functional groups, polar functional groups such as an acidic group and a basic group can be favorably used. The binder may be used singly or in combination of two or more kinds.

While a weight average molecular weight of the binder is not particularly limited, binders having a weight average molecular weight, for example, within a range of 110,000 to 5,000,000 can be favorably used.

A content of the binder in the electrode slurry of the present invention may be appropriately adjusted depending on a type of the power storage device to which the electrode slurry is applied, from the viewpoint of improvement in conductivity and the capacity of the power storage device.

The solvent contained in the electrode slurry of the present invention may be appropriately selected depending on kinds of the active material and the binder to be used. Examples of the solvent include, but are not limited to:

aprotic polar solvents such as NMP, dimethylsulfoxide, dimethylformamide, and $\gamma$-butyrolactone;

aliphatic hydrocarbon-based solvents such as pentane, n-hexane, octane, cyclopentane, and cyclohexane;

aromatic hydrocarbon-based solvents such as benzene, toluene, xylene, cymene, and mesitylene;

aldehyde-based solvents such as furfural;

ketone-based solvents such as acetone, MEK, cyclopentanone, and cyclohexanone;

glycol ester-based solvents such as PMA, ethylene glycol monoethyl ether acetate, 3-methoxybutyl acetate, and ethylene glycol diacetate;

ester-based solvents such as butyl acetate, ethyl acetate, methyl acetate, butyl propionate, dimethyl carbonate, diethyl carbonate, ethylene carbonate, propylene carbonate, and butyl butyrate;

ether-based solvents such as tetrahydrofuran, dioxane, ethylene glycol dimethyl ether, and methylphenyl ether (anisole);

alcohol-based solvents such as methanol, ethanol, n-propyl alcohol, IPA, butyl alcohol, octyl alcohol, cyclohexanol, allyl alcohol, benzyl alcohol, cresol, and furfuryl alcohol;

polyol-based solvents such as glycerol, ethylene glycol, and diethylene glycol;

alcohol ether-based solvents such as ethylene glycol monomethyl ether, ethylene glycol monoethyl ether, ethylene glycol monobutyl ether, PM, and diethylene glycol monobutyl ether; and

water.

These solvents may be used in combination of two or more kinds.

The electrode slurry of the present invention is obtained by kneading the CNT powder for electrodes, an electrode active material, a binder, and a solvent. While the kneading method is not particularly limited, examples of the mixer used in kneading include a planetary mixer, a kneader, an extrusion type kneader, and a thin-film spin system high-speed mixer.

Regarding the mixing order, the ingredients may be mixed at the same time, or the CNT powder for electrodes, the electrode active material, and the binder may be mixed into the solvent in order. The order is not particularly limited, and a mixture of the CNT powder for electrodes and the electrode active material (composite for electrodes) may be gradually added. Furthermore, the solvent and the binder may be mixed and dissolved in advance.

The ratio of the electrode ingredients in the electrode slurry, namely the ratio between the CNT powder for electrodes, the electrode active material, and the binder in the electrode slurry may be appropriately adjusted depending on a type of the powder storage device to which the electrode slurry is applied, from the viewpoint of the thickness of the obtained electrode and the application properties.

The electrode slurry can be prepared, for example, through the following steps. Homogenizing step: preparing a mixture in which an electrode active material, CNT powder for electrodes, and a solvent are mixed.

Defibrating step: kneading the mixture using the mixer.

Finishing step: adding a binder, and the solvent as necessary.

In the defibrating step, the concentration of the electrode active material is adjusted to the concentration of the electrode active material (C, unit: % by weight), which is calculated on the basis of the aforementioned mathematical formula (3) from a tap density ($D_{Tap}$) (unit: $g/cm^3$) of the electrode active material while the solvent is added as necessary. Accordingly, it is possible to provide good defibration property of CNT when kneaded with the solvent, and it is possible to improve the uniform dispersibility of CNT.

Examples of the solvent include, but are not particularly limited to:

alcohol-based solvents such as methanol, ethanol, n-propyl alcohol, IPA, butyl alcohol, octyl alcohol, cyclohexanol, allyl alcohol, benzyl alcohol, cresol, and furfuryl alcohol;

alcohol ether-based solvents such as PM, ethylene glycol monomethyl ether, ethylene glycol monoethyl ether, ETB, ethylene glycol monobutyl ether, 3-methoxy-3-methyl-1-butanol, ethylene glycol monopropyl ether, ethylene glycol phenyl ether, diethylene glycol monobutyl ether, triethylene glycol monobutyl ether, and dipropylene glycol monomethyl ether;

amine-based solvents such as N,N-dimethylaminopropylamine and diethylene triamine;

ether-based solvents such as methylphenyl ether (anisole), tetrahydrofuran, dioxane, and ethylene glycol dimethyl ether;

glycol ester-based solvents such as PMA, ethylene glycol monoethyl ether acetate, 3-methoxybutyl acetate, and ethylene glycol diacetate;

ketone-based solvents such as acetone, MEK, cyclopentanone, and cyclohexanone;

aromatic hydrocarbon-based solvents such as benzene, toluene, xylene, cymene, and mesitylene;

aprotic polar solvents such as NMP, dimethylsulfoxide, and dimethylformamide;

aliphatic hydrocarbon-based solvents such as pentane, n-hexane, octane, cyclopentane, and cyclohexane;

aldehyde-based solvents such as furfural;

ester-based solvents such as butyl acetate, ethyl acetate, methyl acetate, butyl propionate, ethylene glycol monoethyl ether acetate, 3-methoxybutyl acetate, ethylene glycol diacetate, dimethyl carbonate, diethyl carbonate, ethylene carbonate, propylene carbonate, and butyl butyrate;
polyol-based solvents such as glycerol, ethylene glycol, and diethylene glycol; and
water.

Among these, when NMP or water is used, excellent defibration property of CNT can be exerted.

A tap density of the electrode active material can be measured by the prescription according to JIS K 5101-12-2. Regarding a commercially available electrode active material, the mathematical value described in a catalogue may be used.

<Electrode for power storage devices>

An electrode for power storage devices of the present invention (hereinafter, also referred to as an electrode of the present invention) includes an electrode mixture layer formed with the electrode slurry of the present invention, and is specifically obtained by applying the electrode slurry of the present invention on a current collector, and drying the obtained matter. By the drying, the solvent in the electrode slurry of the present invention is removed, and an electrode mixture layer is formed on the current collector, and thus an electrode is obtained.

In the electrode of the present invention, examples of the current collector include Al, Ni, Cu, and stainless steel.

Examples of the shape of the current collector include a foil shape, a plate shape, a mesh shape, a net shape, a lath shape, a punching metal shape, and an emboss shape, as well as combinational shapes of these (for example, mesh-like plate shape, etc.). Also, unevenness may be formed on the surface of the current collector by an etching treatment.

A method of applying the electrode slurry of the present invention on the current collector is not particularly limited.

Examples of the method include a slit die coating method, a screen coating method, a curtain coating method, a knife coating method, a gravure coating method, and an electrostatic spray method. The drying following the application may be performed by a heat treatment, and may be performed by air-blow drying, vacuum drying, and so on. When the drying is performed by a heat treatment, the temperature of the heat treatment is normally about 50 to 150°C. Pressing may be conducted after drying. Examples of the pressing method include die pressing and roll pressing. By the methods mentioned above, the electrode of the present invention can be produced.

The thickness of the electrode is normally about 5 to 500 $\mu$m.

<Power storage device>

A power storage device of the present invention includes an electrode mixture layer formed by using the electrode slurry of the present invention. Specific example of the power storage device includes a liquid type or a solid type power storage device including the electrode of the present invention in which the electrode mixture layer of the electrode slurry of the present invention is formed.

For example, various power storage devices can be listed such as cation redox secondary batteries (lithium ion battery, sodium ion battery, polyvalent metal ion battery, lithium-sulfur battery, sulfide battery, conversion battery, redox flow battery, etc.), anion redox batteries (fluoride battery, chloride battery, zinc anode battery, etc.), various all-solid-state batteries (sulfide-based, oxide-based, nitride-based, polymer-based, etc.), various air cells (lithium air cell, zinc air cell, sodium air cell, etc.), various capacitors (lithium ion capacitor, electric double layer capacitor, etc.), and various fuel cells (solid polymer type, alkali type, etc.).

The power storage device of the present invention can be produced by a known method for producing a power storage device, except for using the electrode of the present invention. The structure of the electrode of the present invention included in the power storage device may be any appropriate structure depending on a type of the power storage device as described above.

EXAMPLES

Materials used in Examples are as follows.

<CNT>

· "LUCAN BT 1003M" (manufactured by LG Chem, MWCNT)

<Dispersant>

· "BL-S": Polyvinyl acetal resin "S-LEC (registered trademark) BL-S" manufactured by SEKISUI CHEMICAL CO., LTD., calculated molecular weight: $2.3 \times 10^4$, hydroxyl group quantity: 23 mol%
· "BL-1" : Polyvinyl acetal resin "S-LEC (registered trademark) BL-1" manufactured by SEKISUI CHEMICAL CO., LTD., calculated molecular weight: $1.9 \times 10^4$, hydroxyl group quantity: 36 mol%
· PVP (polyvinyl pyrrolidone): Polyvinyl pyrrolidone "Polyvinyl pyrrolidone K-30" manufactured by NIPPON SHOKUBAI CO., LTD.

<Binder>

· PVDF (polyvinylidene fluoride): Kureha Battery Materials Japan Co., Ltd. "KF polymer L#1120"

<Electrode active material>

· NCM523 ($LiNi_{0.5}Co_{0.2}Mn_{0.3}O_2$)  tap density: 2.13 g/cm³
· NCM111 ($LiNi_{1/3}Co_{1/3}Mn_{1/3}O_2$)  tap density: 2.31 g/cm³
· LFP($LiFePO_4$)  tap density: 0.97 g/cm³

<Solvent>

Solvents shown in Table 1 were used.
Table 1 shows, for each solvent, hydrogen bond term $\delta_H$ of Hansen solubility parameter, vector length $\delta$ of Hansen solubility parameter, contribution ratio of hydrogen bond term determined by the following mathematical formula (1), and vapor pressure at 20°C.

Contribution ratio of hydrogen bond term = (hydrogen bond term $\delta_H$ of Hansen solubility parameter of the solvent)/(vector length $\delta$ of Hansen solubility parameter of the solvent)      Mathematical formula (1)

[Table 1]

| | Solvent name | $\delta_H$ [(MPa)$^{0.5}$] | $\delta$ [(MPa)$^{0.5}$] | $\delta_H / \delta$ | Vapor pressure (20°C) [kPa] |
|---|---|---|---|---|---|
| NMP | N-methyl-2-pyrrolidone | 7.2 | 23.0 | 0.31 | 0.03 |
| Butyl butyrate | | 5.6 | 16.8 | 0.33 | 0.1 |
| Anisole | Methylphenyl ether | 6.9 | 19.6 | 0.35 | 0.4 |
| PMA | Propylene glycol monomethyl ether acetate | 9.8 | 19.3 | 0.51 | 0.5 |
| PM | Propylene glycol monomethyl ether | 11.6 | 20.4 | 0.57 | 1.2 |
| Toluene | | 2.0 | 18.2 | 0.11 | 2.9 |
| IPA | Isopropyl alcohol | 16.4 | 23.6 | 0.69 | 4.4 |

(continued)

| Solvent name | | $\delta_H$ [(MP-a)$^{0.5}$] | $\delta$ [(MP-a)$^{0.5}$] | $\delta_H/\delta$ | Vapor pressure (20°C) [kPa] |
|---|---|---|---|---|---|
| MEK | Methylethyl ketone | 5.1 | 19.1 | 0.27 | 10.5 |

$\delta_H$: hydrogen bond term of HSP
$\delta$: vector length of HSP
$\delta_H/\delta$: contribution ratio of hydrogen bond term

(Preparation examples 1 to 10: Production of CNT-containing powders 1 to 10)

CNT and a dispersant shown in Table 2 were adjusted so that the weight ratio (CNT:dispersant) was 80:20, and the CNT and the dispersant were added to a solvent shown in Table 2 so that the content of solids was 50 to 10% by weight, and kneaded (temperature: 30°C) to prepare a kneaded matter in a paste form. Then, the kneaded matter was dried to obtain CNT-containing powders 1 to 10.

[Table 2]

| | CNT-containing powder | Solvent | Dispersant |
|---|---|---|---|
| Preparation example 1 | Powder 1 | NMP | BL-S |
| Preparation example 2 | Powder 2 | Butyl butyrate | BL-S |
| Preparation example 3 | Powder 3 | Anisole | BL-S |
| Preparation example 4 | Powder 4 | PMA | BL-S |
| Preparation example 5 | Powder 5 | PM | BL-S |
| Preparation example 6 | Powder 6 | Toluene | BL-S |
| Preparation example 7 | Powder 7 | IPA | BL-S |
| Preparation example 8 | Powder 8 | MEK | BL-S |
| Preparation example 9 | Powder 9 | PM | BL-1 |
| Preparation example 10 | Powder 10 | PM | PVP |

Furthermore, using the powder 7, the amount of dispersant (adhesion ratio) adhering to CNT was examined by the following procedure.

<Procedure>

1. CNT-containing powder (1 g) and NMP (9 g) were weighed, and mixed at 2000 rpm for 3 min. using a planetary centrifugal mixer ("AWATORI RENTARO ARE-310" manufactured by THINKY CORPORATION)
2. NMP (10 g) was added, and the mixture was mixed at 2000 rpm for 3 min.
3. NMP (20 g) was added, and the mixture was left to stand overnight (room temperature (around 20°C), about 18 hours).
4. Solids measurement was conducted (Solids measurement 1).
5. Solid-liquid separation was conducted using a KIRIYAMA funnel and filter paper (No. 5B), and it was visually confirmed that the filtrate was clear (the filtrate did not contain CNT).
6. The filtrate was dried and solids were measured (Solids measurement 2); dried at 130°C for 1 hour.

The measurement results are shown in Table 3.

[Table 3]

| Measurement | Content of solids [wt%] | Content of CNT [wt%] | Content of dispersant [wt%] |
|---|---|---|---|
| 1 | 2.56 | 2.04 | 0.51 |
| 2 | 0.15 | 0 | 0.15 |

From the result shown in Table 3, the liberation percentage of the dispersant calculated from the results of the solids measurements 1 and 2 was 29.3% by weight, revealing that the percentage of the dispersant adhered to CNT was 70.7% by weight.

(Comparative preparation example 1: Production of CNT-containing NMP paste)

In Preparation example 1, drying was not performed, and a kneaded matter in a paste form was given as a final product (hereinafter, referred to as NMP).

(Test examples 1 to 9: production of electrode slurry)

The CNT-containing powders 1 to 8 obtained in Preparation examples 1 to 8 or the NMP paste obtained in Comparative preparation example 1 were kneaded in NMP together with NCM523 and PVDF using a planetary centrifugal mixer to prepare an electrode slurry (content of solids: about 75% by weight, weight composition of solids NCM523:CNT:BL-S:PVDF = 97.0:1.0:0.25:1.75). BL-S in the weight composition comes from the CNT-containing powder or the NMP paste.

<Surface resistivity>

The electrode prepared with the obtained electrode slurry was evaluated in terms of surface resistivity in the following manner.

· Surface resistivity of front side of electrode

For the electrode mixture layer formed by applying an electrode slurry to have a thickness of 0.05 mm on a PET sheet material, surface resistivity was measured using "Loresta-GX MCP-T700" manufactured by Nittoseiko Analytech Co., Ltd.

· Surface resistivity of back side of electrode

An electrode slurry was applied to have a thickness of 0.05 mm on the surface of aluminum foil, and then transferred to a double-faced tape. Surface resistivity of the resultant electrode mixture layer was measured using a "Loresta-GX MCP-T700" manufactured by Nittoseiko Analytech Co., Ltd.

(Evaluation 1: Evaluation of surface resistivity on front side of electrode)

The surface resistivity of 550 $\Omega$/sq or less was evaluated as "good" (2 points), the surface resistivity of more than 550 $\Omega$/sq and 600 $\Omega$/sq or less was evaluated as "fair" (1 point), and the surface resistivity of more than 600 $\Omega$/sq was evaluated as "poor" (0 points).
The lower the mathematical value of surface resistivity, the higher the conductivity is.

(Evaluation 2: Evaluation of front/back ratio in surface resistivity)

The ratio of larger than 0.85 was evaluated as "good" (2 points), the ratio of more than 0.80 and 0.85 or less was evaluated as "fair" (1 point), and the ratio of 0.80 or less was evaluated as "poor" (0 points).
As the front/back ratio departs from 1.00, the CNT is unevenly distributed (poor dispersibility, or the electrode active material cannot be covered with CNT).
Comprehensive evaluation: the total score of evaluations 1 and 2 of 3 points or more was evaluated as "good", and the total score of 2 points or less was evaluated as "poor".
The higher the comprehensive evaluation, the more the both performances of evaluation 1 and evaluation 2 can be satisfied. This means high performance of the electrode. The obtained results are shown in Table 4.

[Table 4]

| | CNT ingredient | Surface resistivity of electrode front side [Ω/sq] | Surface resistivity of electrode back side [Ω/sq] | Ratio of front/back | Evaluation 1 of electrode | Evaluation 2 of electrode | Comprehensive evaluation of electrode | | |
|---|---|---|---|---|---|---|---|---|---|
| Test example 1 | Powder 1 | 5.9E+02 | 7.2E+02 | 0.82 | Fair | Fair | 2 | Poor | Reference example |
| Test example 2 | Powder 2 | 5.6E+02 | 7.7E+02 | 0.73 | Fair | Poor | 1 | Poor | Reference example |
| Test example 3 | Powder 3 | 5.9E+02 | 5.9E+02 | 1.00 | Fair | Good | 3 | Good | Present invention |
| Test example 4 | Powder 4 | 4.8E+02 | 5.9E+02 | 0.81 | Good | Fair | 3 | Good | Present invention |
| Test example 5 | Powder 5 | 5.4E+02 | 6.3E+02 | 0.86 | Good | Good | 4 | Good | Present invention |
| Test example 6 | Powder 6 | 5.1E+02 | 7.8E+02 | 0.65 | Good | Poor | 2 | Poor | Reference example |
| Test example 7 | Powder 7 | 5.5E+02 | 5.8E+02 | 0.95 | Good | Good | 4 | Good | Present invention |
| Test example 8 | Powder 8 | 5.6E+02 | 5.6E+02 | 1.00 | Fair | Good | 3 | Good | Present invention |
| Test example 9 | NMP paste | 5.1E+02 | 6.4E+02 | 0.80 | Good | Poor | 2 | Poor | Conventional product |

Surface resistivity of front side of electrode: surface resistivity of
electrode mixture applied to PET
Surface resistivity of back side of electrode: surface resistivity of electrode
mixture transferred to double-faced tape from aluminum foil

From the results shown in Table 4, all of the electrode slurry obtained in Test examples 3 to 5, 7, 8 were excellent in comprehensive evaluation of electrode.

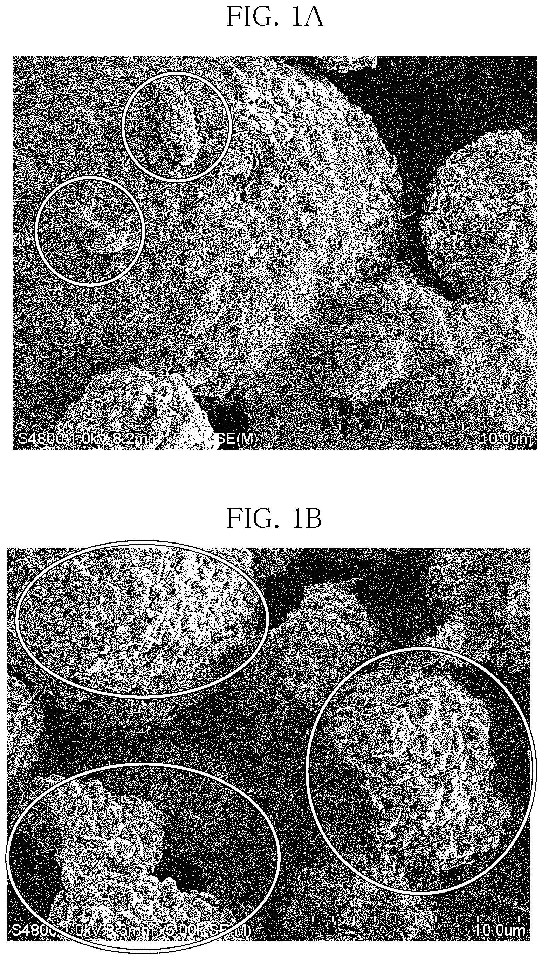

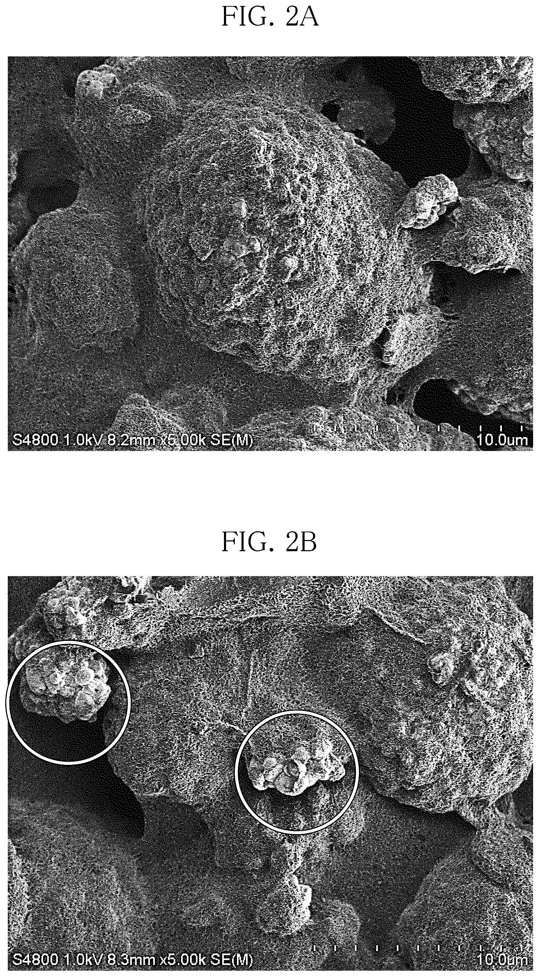

FIGS. 1A and 1B respectively show electron microscopic images of a front side of an electrode and a back side of the electrode prepared with the electrode slurry obtained in Test example 1. FIGS. 2A and 2B respectively show electron microscopic images of a front side of an electrode and a back side of the electrode prepared with the electrode slurry obtained in Test example 5. In the drawings, agglomerated parts of CNT and exposed parts of the positive electrode active material are surrounded with lines.

From FIG. 1A and FIG. 1B, parts where CNT was agglomerated were observed on the front side of the electrode prepared with the electrode slurry obtained in Test example 1, and parts where the positive electrode active material was exposed were observed on the back side of the electrode.

On the other hand, from FIG. 2A and FIG. 2B, a part where CNT was agglomerated was not observed on the front side of the electrode prepared with the electrode slurry obtained in Test example 5. While parts where the positive electrode active material was exposed were observed on the back side, the parts were significantly smaller than in those prepared with the electrode slurry obtained in Test example 1.

(Test examples 10, 11, 12: production of electrode slurry)

As shown in Table 5, the CNT-containing powders 5, 9, 10 prepared in Preparation examples 5, 9, 10 were kneaded together with NCM523 and PVDF in NMP using a planetary centrifugal mixer, to prepare an electrode slurry (content of solids: about 75% by weight, weight composition of solids NCM523:CNT:dispersant:PVDF = 97.0:1.0:0.25:1.75). In the weight composition, the dispersant comes from the CNT-containing powder.

Regarding the surface resistivity of the electrode prepared with the obtained electrode slurry, the electrode front side and the electrode back side were measured in the same manner as described above, and a front/back ratio was calculated.

The results are shown in Table 5.

[Table 5]

| | Electrode active material | CNT ingredient | Dispersant | Surface resistivity of electrode front side [Ω/sq] | Surface resistivity of electrode back side [Ω/sq] | Front/back ratio | |
|---|---|---|---|---|---|---|---|
| Test example 10 | NCM523 | Powder 5 | BL-S | 5.4E+02 | 6.3E+02 | 0.86 | Present invention |
| Test example 11 | | Powder 9 | BL-1 | 6.5E+02 | 6.6E+02 | 0.98 | Present invention |
| Test example 12 | | Powder 10 | PVP | 7.3E+02 | 7.4E+02 | 0.99 | Reference example |

From the results shown in Table 5, although the surface resistivity of the electrode front side is higher in Test example 11 than that of Test example 10, the surface resistivity of the electrode back side is comparable, and the front/back ratio is large. Therefore, the result is good.

On the other hand, in Test example 12, although the front/back ratio is large, both the surface resistivity of the electrode front side and the surface resistivity of the electrode back side are high. Therefore, the result is bad.

(Test examples 13, 14, 15: production of electrode slurry)

As shown in Table 6, the NMP paste prepared in Comparative preparation example 1 or the CNT-containing powders 5, 9 prepared in Preparation examples 5, 9 were kneaded together with NCM111 and PVDF in NMP using a planetary centrifugal mixer, to prepare an electrode slurry (content of solids: about 75% by weight, weight composition of solids NCM111:CNT:dispersant:PVDF = 97.0:1.0:0.25:1.75). In the weight composition, the dispersant comes from the NMP paste or the CNT-containing powder.

Regarding the surface resistivity of the electrode prepared with the obtained electrode slurry, the electrode front side and the electrode back side were measured in the same manner as described above, and a front/back ratio was calculated.

The results are shown in Table 6.

[Table 6]

| | Electrode active material | CNT ingredient | Dispersant | Surface resistivity of electrode front side [Ω/sq] | Surface resistivity of electrode back side [Ω/sq] | Front/back ratio | |
|---|---|---|---|---|---|---|---|
| Test example 13 | | NMP paste | BL-S | 4.5E+02 | 5.8E+02 | 0.78 | Conventional product |
| Test example 14 | NCM111 | Powder 5 | BL-S | 9.9E+02 | 1.2E+03 | 0.83 | Present invention |
| Test example 15 | | Powder 9 | BL-1 | 5.6E+02 | 7.0E+02 | 0.80 | Present invention |

From the results shown in Table 6, in both of Test examples 14, 15, the front/back ratio is larger than that in the conventional product of Test example 13, so that the result is good.

(Test examples 16, 17, 18: production of electrode slurry)

As shown in Table 7, the NMP paste prepared in Comparative preparation example 1 or the CNT-containing powders 5, 9 prepared in Preparation examples 5, 9 were kneaded together with LFP and PVDF in NMP using a planetary centrifugal mixer, to prepare an electrode slurry (content of solids: about 75% by weight, weight composition of solids LFP:CNT:dispersant:PVDF = 97.0:1.0:0.25:1.75). In the weight composition, the dispersant comes from the NMP paste or the CNT-containing powder.

Regarding the surface resistivity of the electrode prepared with the obtained electrode slurry, the electrode front side and the electrode back side were measured in the same manner as described above, and a front/back ratio was calculated.

The results are shown in Table 7.

[Table 7]

| | Electrode active material | CNT ingredient | Dispersant | Surface resistivity of electrode front side [Ω/sq] | Surface resistivity of electrode back side [Ω/sq] | Front/back ratio | |
|---|---|---|---|---|---|---|---|
| Test example 16 | | NMP paste | BL-S | 5.8E+03 | 7.1E+03 | 0.82 | Conventional product |
| Test example 17 | LFP | Powder 5 | BL-S | 7.0E+03 | 7.8E+03 | 0.90 | Present invention |
| Test example 18 | | Powder 9 | BL-1 | 6.5E+03 | 6.8E+03 | 0.96 | Present invention |

From the results shown in Table 7, in both of Test examples 17 and 18, the front/back ratio is larger than that of the conventional product of Test example 16, so that the result is good.

**Claims**

1. CNT-containing powder for electrodes, the CNT-containing powder comprising:

   carbon nanotubes (CNTs); and
   a modified polyvinyl alcohol resin that has an acetal structure and serves as a dispersant.

2. The CNT-containing powder according to claim 1, wherein the dispersant is adhered to a surfaces of each of the CNTs.

3. The CNT-containing powder for electrodes according to claim 1 or 2, wherein a content weight ratio of the CNTs to the dispersant (CNT:dispersant) is 33:67 to 99:1.

4. A composite for electrodes, the composite comprising:

   the CNT-containing powder for electrodes according to any one of claims 1 to 3; and
   an inorganic compound, wherein
   the inorganic compound is an electrode active material and/or a solid electrolyte.

5. An electrode slurry comprising:

   the CNT-containing powder for electrodes according to any one of claims 1 to 3;
   an electrode active material;
   a binder: and
   a solvent.

6. An electrode for power storage devices, the electrode comprising
   an electrode mixture layer prepared from the electrode slurry according to claim 5.

7. A power storage device comprising
   an electrode mixture layer prepared with the electrode slurry according to claim 5.

8. A method for producing the CNT-containing powder for electrodes according to any one of claims 1 to 3, the method comprising:

   kneading the CNTs, the dispersant, and a solvent to prepare a kneaded matter in a paste form, and
   subsequently drying the kneaded matter to obtain CNT-containing powder.

9. The method according to claim 8, wherein the solvent is one or more kinds selected from the group consisting of an alcohol-based solvent, an amine-based solvent, an ether-based solvent, a glycol ester-based solvent, a ketone-based solvent, and water.

## FIG. 1A

## FIG. 1B

# FIG. 2A

# FIG. 2B

## INTERNATIONAL SEARCH REPORT

International application No.

**PCT/JP2023/005790**

### A. CLASSIFICATION OF SUBJECT MATTER

*H01M 4/62*(2006.01)i; *C01B 32/174*(2017.01)i; *C08K 3/04*(2006.01)i; *C08L 29/14*(2006.01)i; *H01B 1/24*(2006.01)i; *H01B 13/00*(2006.01)i; *H01G 11/06*(2013.01)i; *H01G 11/30*(2013.01)i; *H01G 11/36*(2013.01)i; *H01M 4/13*(2010.01)i; *H01M 4/139*(2010.01)i

FI:  H01M4/62 Z; H01M4/13; H01M4/139; H01G11/06; H01G11/36; H01G11/30; H01B1/24 Z; H01B13/00 Z; C01B32/174; C08K3/04; C08L29/14

According to International Patent Classification (IPC) or to both national classification and IPC

### B. FIELDS SEARCHED

Minimum documentation searched (classification system followed by classification symbols)

H01M4/62; C01B32/174; C08K3/04; C08L29/14; H01B1/24; H01B13/00; H01G11/06; H01G11/30; H01G11/36; H01M4/13; H01M4/139

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-535284 A (LG CHEM, LTD.) 29 November 2018 (2018-11-29) paragraphs [0023], [0037]-[0041], [0057], [0072]-[0081] | 1-7 |
| Y | | 8-9 |
| Y | JP 2009-062461 A (DAINICHISEIKA COLOR & CHEMICALS MFG. CO., LTD., NIKKISO CO., LTD.) 26 March 2009 (2009-03-26) paragraphs [0001]-[0007], [0013]-[0037] | 8-9 |
| A | JP 2008-001898 A (RIN, Kankyo) 10 January 2008 (2008-01-10) | 1-9 |
| A | KR 10-2011-0130806 A (PUSAN NAT UNIV COOP FOUND) 06 December 2011 (2011-12-06) | 1-9 |
| A | KR 10-2021-0153849 A (HYOSUNG CHEMICAL CORP.) 20 December 2021 (2021-12-20) | 1-9 |

☐ Further documents are listed in the continuation of Box C.    ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/005790**

| Patent document cited in search report | | | Publication date (day/month/year) | Patent family member(s) | Publication date (day/month/year) |
|---|---|---|---|---|---|
| JP | 2018-535284 | A | 29 November 2018 | US 2018/0269485 A1 paragraphs [0009], [0043], [0044], [0060], [0075]-[0084] WO 2017/052064 A1 EP 3355391 A1 KR 10-2017-0037458 A CN 108028386 A | |
| JP | 2009-062461 | A | 26 March 2009 | (Family: none) | |
| JP | 2008-001898 | A | 10 January 2008 | US 2007/0067881 A1 EP 1878763 A2 | |
| KR | 10-2011-0130806 | A | 06 December 2011 | (Family: none) | |
| KR | 10-2021-0153849 | A | 20 December 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5628503 B
- JP 4828347 B
- JP 5179308 B
- JP 5563188 B
- JP 3306112 B
- JP 4584666 B
- JP 4302589 B
- JP 5162124 B
- JP 5820200 B
- JP 5899379 B
- JP 6259952 B
- JP H06122713 A
- JP H06192326 A
- JP 2021080319 A
- JP 2018210827 A
- JP 2020088389 A